# EUROPEAN PATENT APPLICATION

(11) **EP 3 905 385 A1**
(43) Date of publication of application: **03.11.2021**
(21) Application number: 19903393.7
(22) Date of filing: 06.12.2019
(51) Int. Cl.: H01M 4/04

(54) **METHOD FOR MANUFACTURING ELECTRODE**

(30) Priority: 26.12.2018 JP 2018243736
(71) Applicant: Panasonic Intellectual Property Management Co., Ltd., Osaka-shi, Osaka 540-6207 (JP)
(72) Inventor: AKIRA, Tatsuya, Osaka-shi, Osaka 540-6207 (JP); KURODA, Yuta, Osaka-shi, Osaka 540-6207 (JP); HOJO, Satoaki, Osaka-shi, Osaka 540-6207 (JP); KINUGAWA, Motoki, Osaka-shi, Osaka 540-6207 (JP)
(74) Representative: Vigand, Philippe
(86) International application number: PCT/JP2019/047729
(87) International publication number: WO 2020/137436

(57) **Abstract**

A method of manufacturing an electrode includes: an application process of applying mixture slurry containing a dispersion medium and an electrode mixture that contains an electrode active material onto a surface of a core material sheet to form a first electrode plate having a wet coating film; a drying process of heating the first electrode plate at a first temperature to volatilize the dispersion medium from the wet coating film to form a second electrode plate having a dry coating film; and a firing process of heating the second electrode plate at a second temperature higher than the first temperature to obtain a fired third electrode plate. In the firing process, the second electrode plate is heated at the second temperature while being transported by a roll-to-roll method.

## Description

### Technical Field

The present invention relates to a method of manufacturing an electrode for use in, for example, a lithium ion secondary battery.

### Background Art

An electrode including a core material sheet and an electrode mixture layer formed on a surface of the core material sheet is usually obtained through a process of applying mixture slurry containing a dispersion medium and an electrode mixture that contains an electrode active material onto the core material sheet and then drying the coated film (PTL 1 and PTL 2). An electrode plate after drying is usually wound into a hoop shape.

### Citation List

### Patent Literature

PTL 1: Japanese Published Unexamined Patent Application No. 2007-234806
PTL 2: Japanese Published Unexamined Patent Application No. 2014-49184

### Summary of Invention

### Technical Problem

There is a case in which it is desirable to further heat the electrode plate wound in a hoop shape. For example, heating can reduce moisture remaining in the electrode mixture layer. In addition, heating can control the mechanical characteristics of the core material sheet.

However, electrode manufacturing costs increase since uniformly heating the electrode plate wound in a hoop shape requires a long time. The thickness of the electrode mixture layer also increases compared with that before heating since the rolled electrode plate has a residual stress. The thickness of the electrode mixture layer easily increases in the vicinity of the outer periphery of the hoop compared with that in the vicinity of the center of the hoop, which generates variations in the thickness of the electrode mixture layer. As a result, the sizes of electrode bodies manufactured from the electrode plate also vary, and efficiency in the production of batteries may decrease. Solution to Problem

One aspect of the present invention relates to a method of manufacturing an electrode. The method includes: an application process of applying mixture slurry containing a dispersion medium and an electrode mixture that contains an electrode active material onto a surface of a core material sheet to form a first electrode plate having a wet coating film; a drying process of heating the first electrode plate at a first temperature to volatilize the dispersion medium from the wet coating film to form a second electrode plate having a dry coating film; and a firing process of heating the second electrode plate at a second temperature higher than the first temperature to obtain a fired third electrode plate. In the firing process, the second electrode plate is heated at the second temperature while being transported by a roll-to-roll method.

### Advantageous Effects of Invention

According to the present invention, it is possible to efficiently produce an electrode with less variations in the thickness of an electrode mixture layer.

The attached claims describe novel features of the present invention. The present invention will be further understood regarding both the configurations and the contents thereof, in addition to the other objects and features of the present invention, through the following detailed description with reference to the drawings.

### Brief Description of Drawings

[Figure 1] Figure 1 illustrates processes in a method of manufacturing an electrode according to one embodiment of the present invention.
[Figure 2] Figure 2 illustrates processes in a method of manufacturing an electrode according to another embodiment of the present invention.

### Description of Embodiments

A method of manufacturing an electrode according to the present invention includes an application process (i) of applying mixture slurry containing a dispersion medium and an electrode mixture that contains an electrode active material onto a surface of a core material sheet to form a first electrode plate having a wet coating film, a drying process (ii) of heating the first electrode plate at a first temperature to volatilize the dispersion medium to form a second electrode plate having a dry coating film, and a firing process (iii) of heating the second electrode plate at a second temperature higher than the first temperature to obtain a third electrode plate.

In the firing process (iii), the second electrode plate is heated at the second temperature while being transported by a roll-to-roll method. The roll-to-roll (Roll-to-Roll) method is a method in which a core material sheet or electrode plates are transported with the use of transporting rolls or the like. In the roll-to-roll method, a core material sheet or electrode plates are transported along a transport path between an unwinding roll and a winding roll.

The firing process may include bringing the dry coating film into contact with the peripheral surface of a heated firing roll. In the firing process, the second electrode plate may be heated at the second temperature in an inert atmosphere.

In the application process, the mixture slurry may be applied onto the core material sheet being transported by the roll-to-roll method. In the drying process, the first electrode plate may be heated at the first temperature while being transported by the roll-to-roll method continuously from the application process.

More specifically, the application process may include a first application step in which the mixture slurry is applied onto one surface of the core material sheet being transported by the roll-to-roll method, and a second application step in which, after the first application step, the mixture slurry is applied onto the other surface of the core material sheet being transported by the roll-to-roll method. In this case, the drying process may include, after the first application step and before the second application step, a first drying step of heating the first electrode plate being transported by the roll-to-roll method continuously from the first application step at the first temperature and include, after the second application step, a second drying step of heating the first electrode plate being transported by the roll-to-roll method continuously from the second application step at the first temperature.

A rolling process of rolling the dry coating film may be further included between the drying process and the firing process. In the rolling process, the second electrode plate may be rolled by a rolling roll while being transported by the roll-to-roll method continuously from the drying process.

The second electrode plate may be wound and collected after the drying process. In this case, in the rolling process, the collected second electrode plate may be unwound and rolled by the rolling roll while being transported by the roll-to-roll method.

In the firing process, the second electrode plate may be heated at the second temperature while being transported by the roll-to-roll method continuously from the rolling process.

A slitting process of cutting the third electrode plate to a predetermined size may be further included after the firing process. In the slitting process, the third electrode plate may be preferably cut by, for example, a laser.

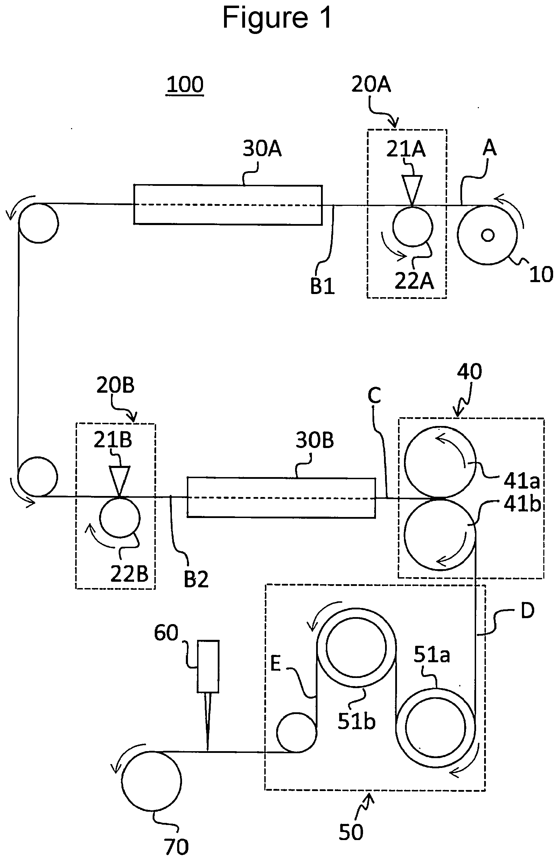

Hereinafter, a case in which an electrode (hereinafter simply referred to as an electrode) for a lithium ion secondary battery is manufactured will be mainly described with reference to Figure 1.

As illustrated in Figure 1, an electrode E is manufactured by a manufacturing line 100 that includes an unwinding roll 10, a first coating apparatus 20A, a first drying apparatus 30A, a second coating apparatus 20B, a second drying apparatus 30B, a rolling apparatus 40, a firing apparatus 50, a slitting apparatus 60, and a winding roll 70 in this order. A case in which almost all of the processes are continuously performed in the series of the manufacturing line 100 will be presented here. However, the processes are not limited thereto, and, for example, an electrode plate may be once wound after some of the processes are continuously performed and may be then unwound to perform the next process.

Hereinafter, each process will be described.

### (i) Application Process

In the application process, the mixture slurry containing the dispersion medium and the electrode mixture that contains the electrode active material is applied onto a surface of the core material sheet, and the first electrode plate having the wet coating film is thereby formed. Here, the first electrode plate is an electrode plate having a wet coating film or an electrode plate until when the final drying process is ended. The wet coating film is a coating film in which most of the dispersion medium contained in the mixture slurry remains. The application process is performed on, for example, a core material sheet being transported by the roll-to-roll method, that is, in the middle of being transported along the transport path between the unwinding roll and the winding roll.

Specifically, as illustrated in Figure 1, a core material sheet A that is wound in a hoop shape is unwound from the outer peripheral side successively by the unwinding roll 10 and is supplied to the first coating apparatus 20A and the second coating apparatus 20B sequentially. The core material sheet is a conductive sheet that functions as a current collector of an electrode plate. For example, a metal foil is used as the core material sheet. When an electrode to be manufactured is a negative electrode, a metal foil of copper, a copper alloy, nickel, a nickel alloy, or the like is used as the core material sheet A. When an electrode to be manufactured is a positive electrode, a metal foil of aluminum, an aluminum alloy, titanium, a titanium alloy, stainless steel, or the like is used as the core material sheet A.

The coating apparatus that performs the application process is not particularly limited. A die coater, a comma coater, a gravure coater, or the like is usable. A coating roll included in the coating apparatus may be provided in the transport path. The coating roll may also serve as a transporting roll as with a backup roll of a comma coater or a gravure coater.

The first coating apparatus 20A and the second coating apparatus 20B illustrated in Figure 1 are die coaters including slot dies 21A and 21B, respectively. Backup rolls 22A and 22B are provided on the opposite side of the slot dies 21A and 21B, respectively, with the core material sheet interposed therebetween. The backup rolls 22A and 22B also serve as transporting rolls. A pair of the slot die 21A and the backup roll 22A form a first wet coating film on one surface of the core material sheet A to form a first electrode plate B1 (the first application step), and then, after the later-described first drying step, a pair of the slot die 21B and the backup roll 22B form a second wet coating film on the other surface of the core material sheet A to obtain a first electrode plate B2 (the second application step).

The mixture slurry is prepared by mixing the dispersion medium and the electrode mixture. The electrode mixture contains the electrode active material as an essential component and can contain optional components, such as a binder material, a conductive material, and the like. The dispersion medium is a liquid component in which the electrode mixture is dispersed.

The electrode active material is a material that develops an electrochemical capacity. For example, an electrode active material of a lithium ion secondary battery develops a capacity by an oxidation-reduction reaction along with insertion (occlusion) and extraction (discharge) of lithium ion. When an electrode to be manufactured is a negative electrode, a carbon material or the like is used as a negative electrode active material. As the carbon material, graphite, non-graphitizable carbon, graphitizable carbon, or the like is used. When an electrode to be manufactured is a positive electrode, a lithium-containing transition metal oxide, an olivine-type lithium phosphate, or the like is used as a positive electrode active material. A rock salt-type oxide or the like, such as a lithium cobalt oxide, having a layer structure is used as the lithium-containing transition metal oxide. The lithium-containing transition metal oxide is, however, not particularly limited.

As the binder, a fluororesin, such as polytetrafluoroethylene or polyvinylidene fluoride; an acrylic resin, such as polymethyl acrylate; a rubbery material, such as styrene butadiene rubber (SBR) or acrylic rubber; or mixtures thereof and the like can be presented as examples. A water-soluble resin, such as carboxymethyl cellulose, may be used as a thickener.

As the dispersion medium, water, an organic solvent, or the like is usable. As the organic solvent, alcohols, such as ethanol, ethers, such as tetrahydrofuran (THF), ketones, such as acetone, N-methyl-2-pyrrolidone (NMP), and the like can be presented. These may be mixed to be used.

### (ii) Drying Process

In the drying process, the first electrode plate is heated at the first temperature, a most part (for example, 99.7% or more) of the dispersion medium is removed from the wet coating film, and the second electrode plate is obtained. Here, the second electrode plate is an electrode plate from when the final drying process (that is, the second drying process in Figure 1) is ended until when the firing process is ended. In the drying process, the wet coating film may be preferably dried, for example, in air, in a reduced-pressure atmosphere, in an inert gas atmosphere, or the like. Dried warm air may be blown onto the wet coating film.

Here, the first temperature is a maximum temperature that the core material sheet reaches in the drying process. The first temperature is not particularly limited and may be preferably, for example, 60°C or higher or 100°C or higher. From the point of view of suppressing deterioration of the components contained in the electrode mixture and the core material sheet, the first temperature may be preferably 150°C or lower or 120°C or lower.

In the drying process, the first electrode plate may be heated at the first temperature while being transported by the roll-to-roll method continuously from the application process. That is, the application process and the drying process may be performed continuously to improve work efficiency.

The first drying apparatus 30A and the second drying apparatus 30B illustrated in Figure 1 are each a drying furnace. In the first drying apparatus 30A, a first wet coating film included in the first electrode plate B1 is heated to the first temperature and dried (the first drying step). In the second drying apparatus 30B, a second wet coating film included in the first electrode plate B2 is heated to the first temperature and dried (the second drying step). The drying furnaces 30A and 30B each have a tunnel-shaped structure having a transport path in the inner portion thereof. While the first electrode plates B1 and B2 being transported are transported in the drying furnaces 30A and 30B, most of the dispersion medium is volatilized from each wet coating film, and a second electrode plate C including dry coating films on both surfaces is output from an outlet of the drying furnace 30B.

The drying time may be selected, as appropriate, in accordance with the type of the dispersion medium, the first temperature, the atmospheric pressure, and the like and may be preferably, for example, 1 to 30 minutes.

### (iii) Firing Process

In the firing process, the second electrode plate is heated at the second temperature that is higher than the first temperature, and the third electrode plate that has been fired is obtained. Here, the third electrode plate is an electrode plate from when the final firing process is ended until when the third electrode plate is subjected to the slitting process. In the firing process, the second electrode plate is heated at the second temperature while being transported by the roll-to-roll method.

In the firing process, the dispersion medium remaining in the dry coating film is further volatilized, and the mechanical characteristics, such as flexibility, of the core material sheet are adjusted. When the second electrode plate being transported is fired, the thickness of the dry coating film increases due to a residual stress of the dry coating film. An increase in the thickness of the dry coating film is, however, substantially uniform since the degree of heating is substantially the same and the degree of a pressure that may be applied is also substantially the same in all parts. That is, variations in the thickness of the dry coating film are not easily generated, and efficiency in the production of a battery may be improved. In addition, the heating time may be remarkably shortened compared with when an electrode plate wound in a hoop shape is heated.

In particular, in manufacture of a negative electrode for a lithium ion secondary battery, the thickness of a dry coating film (that is, an electrode mixture layer) easily increases in the firing process due to the large residual stress of a carbon material used as a negative electrode active material. A reduction in variations in the thickness of a negative electrode mixture layer of a negative electrode for a lithium ion secondary battery may remarkably improve efficiency in the production of the lithium ion secondary battery.

In the firing process, the dry coating film may be brought into contact with the peripheral surface of the firing roll that has been heated. The firing roll may preferably have a heating mechanism that heats the peripheral surface of the firing roll. For example, a heater may be incorporated in the inner portion of the firing roll, or a passage in an axial direction may be provided in the firing roll and a fluid having a high temperature may be circulated in the passage. Consequently, the second electrode plate is heated to the second temperature in a shorter time and fired. From the point of view of improving efficiency in firing, the dry coating film may be provided along the firing roll such that 50% or more of the area of the peripheral surface of the firing roll is covered by the dry coating film.

Here, the second temperature is a maximum temperature that the core material sheet reaches in the firing process. The second temperature may be preferably a temperature that can further remove the dispersion medium (in particular, moisture) that has not been removed in the drying process and may be a temperature that can improve the flexibility of the core material sheet. The second temperature may be preferably, for example, 150°C or higher and may be 200°C or higher. From the point of view of increasing the effect of the firing process, a temperature difference between the first temperature and the second temperature may be preferably set to, for example, 50°C or higher. From the point of view of suppressing deterioration of the components contained in the electrode mixture and the core material sheet, the second temperature may be preferably 300°C or lower and may be 250°C or lower.

In the firing process, for example, the dry coating film may be preferably heated to the second temperature in an inert atmosphere. The inert atmosphere may be preferably, for example, a nitrogen gas atmosphere, an atmosphere of a noble gas, such as argon, a reduced-pressure atmosphere, or the like. Consequently, deterioration in the components contained in the electrode mixture and the core material sheet is easily suppressed.

The firing apparatus 50 illustrated in Figure 1 includes a first firing roll 51a and a second firing roll 51b in each of which at least the peripheral surface is heated. While a rolled second electrode plate D is transported in contact with the peripheral surface of the first firing roll 51a, the dry coating film formed on one surface of the core material sheet A is heated to the second temperature by the first firing roll 51a and fired. Subsequently, while the rolled second electrode plate D is transported in contact with the peripheral surface of the second firing roll 51b, the dry coating film formed on the other surface of the core material sheet A is heated to the second temperature by the second firing roll 51b and fired.

The firing time may be preferably selected, as appropriate, in accordance with the second temperature, the atmospheric pressure, and the like. A speed at which an electrode plate is fed by the firing roll may be preferably set to, for example, 20 to 50 m/min.

### (iv) Rolling Process

A rolling process of rolling the dry coating film may be further included between the drying process and the firing process. Compressing the dry coating film in the rolling process may increase the density and the strength of the coating film. In the rolling process, the second electrode plate may be rolled by a rolling roll while being transported by the roll-to-roll method continuously from the drying process. In the firing process after that, the second electrode plate may be heated at the second temperature while being transported by the roll-to-roll method continuously from the rolling process. That is, the drying process and the rolling process may be performed continuously and the rolling process and the firing process may be further performed continuously to improve work efficiency.

The rolling apparatus 40 illustrated in Figure 1 includes a first roll 41a and a second roll 41b that are disposed parallel to each other in the axial directions. The first roll 41a or the second roll 41b serves as a transporting roll. A gap smaller than the thickness of the second electrode plate C is formed between the first roll 41a and the second roll 41b. The second electrode plate C is input into the gap, and the second electrode plate D including the dry coating film that has been compressed is output from the gap. In the illustrated example, the rolling apparatus 40 including a pair of rolls is presented. The rolling apparatus 40, however, may include a series of two or more pairs of rolls.

The linear pressure applied to the dry coating film between the first roll 41a and the second roll 41b is, for example, 0.2 to 1 kN/cm and may be 0.3 to 0.8 kN/cm.

### (v) Slitting Process

A slitting process of cutting a fired third electrode plate E to a predetermined size may be further included after the firing process. At this time, the third electrode plate E may be cut with a cutting apparatus while being transported by the roll-to-roll method continuously from the firing process. That is, the firing process and the slitting process may be performed continuously to improve work efficiency. In such continuous processes, it is efficient to cut the third electrode plate E by using a laser.

The slitting apparatus 60 illustrated in Figure 1 is a laser machining apparatus that cuts the third electrode plate E fired and having a width corresponding to the widths of a plurality of batteries into an electrode having a width corresponding to the width of one battery. A plurality of electrodes formed at the end of the slitting process are each wound into a hoop shape to be parallel to each other by the winding roll 70.

Each obtained electrode has, for example, a belt shape, is wound together with a counter electrode and a separator into a spiral shape, and forms a columnar electrode body. The columnar electrode body is, for example, housed together with a nonaqueous electrolyte in a bottomed metal can having an opening. A cylinder-shaped lithium ion secondary battery is obtained by closing an opening of a battery can with a sealing body.

A variation in the thickness of an electrode varies the size of an electrode body and may disable insertion of the electrode body into a battery can and may cause the electrode body to be excessively small with respect to the battery can, resulting in a decrease in efficiency in the production of a battery. In contrast, the manufacturing method according to the present embodiment reduces such a concern since the variation in the thickness of the electrode is small.

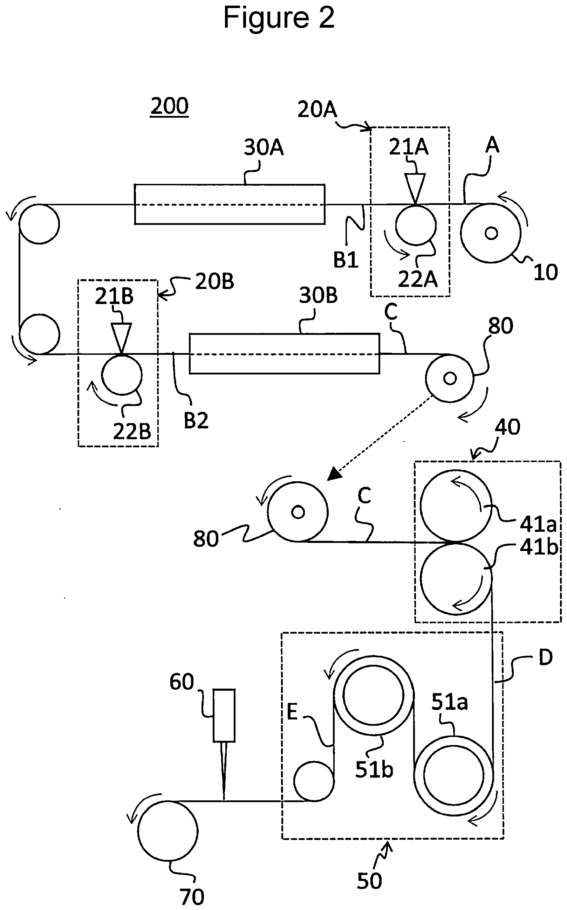

Next, a method of manufacturing an electrode according to another embodiment will be described with reference to Figure 2. Elements that are the same as or correspond to those in Figure 1 are given the same reference signs as those in Figure 1.

In the present embodiment, a relay roll 80 is used as illustrated in Figure 2. That is, the electrode E is manufactured by a manufacturing line 200 including the unwinding roll 10, the first coating apparatus 20A, the first drying apparatus 30A, the second coating apparatus 20B, the second drying apparatus 30B, the relay roll 80, the rolling apparatus 40, the firing apparatus 50, the slitting apparatus 60, and the winding roll 70. Here, the application process and the drying process are continuously performed at some parts of the manufacturing line 200, and then, the remaining processes, including the rolling process and the firing process, are continuously performed at the remaining parts of the manufacturing line 200. Other than the aforementioned processes, manufacturing processes are performed in the same manner as in Embodiment 1. By once collecting the second electrode plate by the relay roll 80, it is possible to, for example, perform the processes up to the drying process and the rolling process and subsequent processes at different places, and the freedom of manufacturing processes is increased.

While a cylinder-shaped battery has been mainly described above, the shape of the battery is not limited to a cylinder shape and may be a rectangular shape, a flat shape, or the like. The electrode body is not limited to be columnar and may have a layered shape or the like.

### Industrial Applicability

The method of manufacturing an electrode according to the present invention is suitable, for example, as a method of manufacturing a negative electrode for a lithium ion secondary battery.

Regarding the present invention, embodiments that are currently preferable have been described. However, such disclosures should not be interpreted in a limited manner. Various changes and modifications must become apparent to persons skilled in technical fields belonging to the present invention through reading of the aforementioned disclosures. Therefore, the attached claims should be interpreted to include all of changes and modifications without departing from the true spirit and the scope of the present invention. Reference Signs List

- 100, 200:: manufacturing line
- 10:: unwinding roll
- 20A:: first coating apparatus
- 21A:: slot die
- 22A:: backup roll
- 20B:: second coating apparatus
- 21B:: slot die
- 22B:: backup roll
- 30A:: first drying apparatus
- 30B:: second drying apparatus
- 40:: rolling apparatus
- 41a:: firing roll
- 41b:: second roll
- 50:: firing apparatus
- 51a:: first firing roll
- 51b:: second firing roll
- 60:: slitting apparatus
- 70:: winding roll
- 80:: relay roll

## Claims

1. A method of manufacturing an electrode, the method comprising:
an application process of applying mixture slurry containing a dispersion medium and an electrode mixture that contains an electrode active material onto a surface of a core material sheet to form a first electrode plate having a wet coating film;
a drying process of heating the first electrode plate at a first temperature to volatilize the dispersion medium from the wet coating film to form a second electrode plate having a dry coating film; and
a firing process of heating the second electrode plate at a second temperature higher than the first temperature to obtain a fired third electrode plate,
wherein, in the firing process, the second electrode plate is heated at the second temperature while being transported by a roll-to-roll method.

2. The method of manufacturing the electrode according to claim 1, wherein the firing process includes bringing the dry coating film into contact with a peripheral surface of a heated firing roll.

3. The method of manufacturing the electrode according to claim 1 or claim 2, wherein, in the firing process, the second electrode plate is heated at the second temperature in an inert atmosphere.

4. The method of manufacturing the electrode according to any one of claims 1 to 3, wherein, in the application process, the mixture slurry is applied onto the core material sheet being transported by the roll-to-roll method.

5. The method of manufacturing the electrode according to claim 4, wherein, in the drying process, the first electrode plate is heated at the first temperature while being transported by the roll-to-roll method continuously from the application process.

6. The method of manufacturing the electrode according to claim 5,
wherein the application process includes
a first application step in which the mixture slurry is applied onto one surface of the core material sheet being transported by the roll-to-roll method, and
a second application step in which, after the first application step, the mixture slurry is applied to another surface of the core material sheet being transported by the roll-to-roll method, and
wherein the drying process includes
a first drying step in which, after the first application step and before the second application step, the first electrode plate is heated at the first temperature while being transported by the roll-to-roll method continuously from the first application step, and
a second drying step in which, after the second application step, the first electrode plate is heated at the first temperature while being transported by the roll-to-roll method continuously from the second application step.

7. The method of manufacturing the electrode according to any one of claims 1 to 6, the method further comprising a rolling process of rolling the dry coating film between the drying process and the firing process.

8. The method of manufacturing the electrode according to claim 7, wherein, in the rolling process, the second electrode plate is rolled by a rolling roll while being transported by the roll-to-roll method continuously from the drying process.

9. The method of manufacturing the electrode according to claim 7, wherein, after the drying process, the second electrode plate is wound and collected, and
wherein, in the rolling process, the collected second electrode is unwound and rolled by a rolling roll while being transported by the roll-to-roll method.

10. The method of manufacturing the electrode according to claim 8 or claim 9, wherein, in the firing process, the second electrode plate is heated at the second temperature while being transported by the roll-to-roll method continuously from the rolling process.

11. The method of manufacturing the electrode according to any one of claims 1 to 10, the method further comprising, after the firing process, a slitting process of cutting the third electrode plate to a predetermined size.

12. The method of manufacturing the electrode according to claim 11, wherein, in the slitting process, the third electrode plate is cut by a laser.

13. The method of manufacturing the electrode according to any one of claims 1 to 12, wherein the electrode active material contains a carbon material.
